# EUROPEAN PATENT SPECIFICATION

(11) **EP 1 794 084 B1**
(45) Date of publication and mention of the grant of the patent: **07.03.2018**
(21) Application number: 05789641.7
(22) Date of filing: 05.09.2005
(51) Int. Cl.: C01B 5/02, B01D 59/04, C02F 1/04, C02F 1/32, C02F 1/78, C02F 101/00, B01D 3/14, B01D 3/42

(54) **PROCESS AND INSTALLATION FOR OBTAINING THE DEUTERIUM DEPLETED WATER**
VERFAHREN UND VORRICHTUNG ZUM ERHALT VON DEUTERIUMABGEREICHERTEM WASSER
PROCEDE ET INSTALLATION POUR OBTENIR DE L'EAU APPAUVRIE EN DEUTERIUM

(30) Priority: 07.09.2004 RO 200400771; 25.05.2005 RO 200500497
(43) Date of publication of application: 13.06.2007
(73) Proprietor: MECRO SYSTEM SRL, 061334 Bucuresti (RO)
(72) Inventor: STEFANESCU, Ioan, Jud. Valcea (RO); TITESCU, Gheorghe, jud. Valcea (RO)
(74) Representative: Ciuda-Berivoe, Anca
(86) International application number: PCT/RO2005/000011
(87) International publication number: WO 2006/028400

(56) References cited:
- CA-A1- 2 024 414
- US-A1- 2004 241 299
- DATABASE WPI Section Ch, Week 199812 Derwent Publications Ltd., London, GB; Class D15, AN 1998-128943 XP002366070 & RO 112 422 B1 (INST CRIOGENIE SEPARARI IZOTOPICE) 30 September 1997 (1997-09-30)
- DATABASE WPI Section Ch, Week 200022 Derwent Publications Ltd., London, GB; Class B06, AN 2000-254743 XP002366227 & RO 115 148 B1 (REGIA AUTONOMA ACTIVITATI NUCLEARE SUCUR) 30 November 1999 (1999-11-30)

## Description

### TECHNICAL FIELD OF THE DESCRIPTION

The invention refers to a process and an installation for the obtaining the deuterium depleted water preferably for food use.

### BACKGROUND OF THE INVENTION

Continuous processes are known for the obtaining the deuterium depleted water with a concentration of 2 to 80 ppm D/(D+H), which comprise the isotopic distillation of natural water with a concentration of 145-150 ppm D/(D+H) or of the residue from the manufacture of heavy water with a concentration of 120 ppm D/(D+H) under a 100 mm Hg vacuum, water which is passed through a pelicular boiler in order to achieve total evaporation of a controlled and regulated constant flow of water, which determines also the continuous feed of water, the vapor flow having an ascendent flow in a 15 m high and 0.1 m diameter distillation column, provided with packing, after which the extracted vapor flow is converted in liquid phase, part of it being recycled as a reflux at the top zone of the column at a temperature as close to the actual temperature of the zone as possible, and the other part is collected at a constant extraction flow separately from the collection of a liquid phase which comes from the bottom of the column, in both cases the collection being made under a 100 mm Hg vacuum.

The disadvantages of these processes consist in the pseudo stationary regimen of these ones, which occur with perturbations of the isotopic separation considering there is only one processing cycle, for the feed deionized water is necessary, and the feed water consumption is rather large because it must provide, by total evaporation, the vapor flow necessary for the isotopic transfer with the liquid flow.

Installations are known for the manufacture of deuterium depleted water in which the processes presented above are applied which comprise a thermally insulated distillation column, in which there is an ordered packing disposed above a liquid collector, at the bottom of the column being connected a pelicular boiler heated with steam, linked to a constant level feeding tank, through a pipe fitted with a flow meter, a regulating tap and a heat exchanger respectively the liquid collecting tank, being connected through another pipe provided with a tap, the heat exchanger and another flow meter, to a collecting tank, the column being connected at its upper side to a vacuum pump, through another pipe fitted with two serial condensers and a tap respectively, these condensers being connected through another pipe fitted with a flow meter and a heat exchanger, heated with steam, with the upper part of the column, this last pipe being connected to another pipe fitted with a tap and a flow meter, which communicates to another collecting tank, which in turn, together with the other collecting tank are connected to the vacuum pump.

The disadvantages of these installations are that they have a relatively low capacity and the manufacturing scale-up determines an amplification of the perturbations, with unfavorable effects on the production capacity or on the quality of the product.

The deuterium depleted water obtained by applying the process in the installation described in patent RO 112422B1 has a deuterium concentration of 2 - 80 ppm D/(D+H) with the following characteristics:
pH= 6,5..7,5 ; Consumption KMnO₄ < 1,5 mg/l; Cl⁻ <0,1 mg/l ; Conductivity < 1,5 µS/cm ; SO₄²⁻ <0,1 mg/l; PO₄³⁻ < 0,1 mg/l ; Ca²⁺ <0,1 mg/l ;
Mg²⁺ < 0,1 mg/l ; Fe²⁺<0,1 mg/l ; Cu²⁺ < 0,1 mg/l ; Bacteriologic exam: steril.

The disadvantages of these deuterium depleted waters are that having similar physico-chemical characteristics to distilled water, they are not accepted in the category of potable waters for food use.

Other processes for obtaining the deuterium depleted water are known, patent RO 115148 B1, which comprise continuous feeding with natural water or with residue from the manufacturing of heavy water having a concentration of 120 ppm D/(D+H), of a distillation zone in feeding points situated at different heights depending on the required degree of deuterium depletion, after which the ascendent vapor flow is intimately contacted with the descending liquid flow achieving thus the deuterium enrichment of the liquid and the deuterium depletion of the vapors, obtaining continuously deuterium depleted water, named light water and by batches heavy water.

The disadvantages of these processes consist in the permanent danger of impurification due to the crossing of the light water with the heavy water, which is very toxic, at any accidental hydrodynamic perturbation, due for example to the pressure variations on the columns or to the variations of liquid flows.

Installations for the manufacture of deuterium depleted water are known which apply the processes described in the patent RO 115148 B1, comprising three distillation columns connected serially with equal heights, each of them having an ordered packing, the first column which has a larger diameter than the other two which have the same diameter, being provided with several feeding points at different heights, at the bottom of each of the first and the last column being connected a boiler which provides the ascending vapor flow at constant flow rates, at the top of the first column being connected two condensers, two buffer tanks, a reflux tank and a vacuum pump, providing thus the reflux introduced in the first column, a part of the reflux being extracted as product as light water, while in the other columns the liquid flow is enriched in deuterium, a part of it being extracted from the outlet of a pump for the heavy water.

The disadvantages of these installations consist in their relatively large dimensions, the control and regulation of the different parameters characteristic to an optimal regimen for obtaining the two products simultaneously at the two ends of the column are relatively hard to achieve, due to the sensitivity of the system to the perturbations determined by the variations of processing parameters, and after these perturbations the production is stopped, long periods of time (tens of hours) being necessary to come back to the desired concentration, these stops determining big energetic consumption on the product unit.

The deuterium depleted water obtained by applying these processes in the installations according to patent RO 115148 B1 has a deuterium concentration of 1 - 80 ppm D/(D+H) with the following characteristics:
pH=6,5...7,5; SiO₂ < 0,1 mg/l ; Cl⁻ < 0,1 mg/l; K⁺ < 0,1 mg/l; SO₄²⁻ < 0,1mg/l; PO₄³⁻ < 0,1 mg/l; Ca²⁺ < 0,1 mg/l; Mg²⁺ < 0,1 mg/l; Fe²⁺ < 0,1 mg/l ;
Cu²⁺ < 0,1; Mn²⁺ < 0,1 mg/l; Consumption KMnO₄ < 1,5 mg/l ; Na⁺ < 0,1 mg/l ; Conductivity < 1, 5 µS/cm; Oxidability < 0,5 mg/l; Turbidity < 3,0 ppm SiO₂; Bacteriologic exam: pathogen free.

The disadvantages of these deuterium depleted waters consist in the fact that they cannot be considered potable waters because they are demineralized waters, they do not contain the mineral substances imposed by the standard, and the manufacture of a deuterium depleted water with a constant deuterium concentration, is perturbed by the permanent tendency of contamination with heavy water, a very toxic product for living organisms.

### DISCLOSURE OF INVENTION

The technical problem solved by the inventions belonging to the group of inventions consists in obtaining continuously water for food use, with a constant deuterium content of 20-30 ppm D/(D+H) and a controlled content of mineral salts, without toxicity for living organisms, without the presence of pathogens or ozone concentrations at harmful levels and there is no waste which negatively influences the natural equilibrium of the environment.

Surprisingly, we noticed that maintaining a 1 : 5 ratio between the raw material flow with a temperature of 45°C, and the vapor flow with a temperature of 60°C, when the pressure at the top of the isotopic distillation column is 100 mm col. Hg, and the temperature 51.5°C respectively, the column having a height: diameter ratio of 45 : 1, leads to a product flow consisting of deuterium depleted water representing 4.5% of the vapor flow with a concentration of 20-30 ppm D/(D+H). Also in this context the discarding of the waste is done without negative effects on the natural equilibrium of the environment, since the water with under 200 ppm deuterium content is not harmful and in contact with the humidity in the atmosphere it equilibrates isotopically in a short time of about 72 hours to the concentration and quality of natural water having a 145 ppm D/(D+H) content.

The process according to the invention does not have the disadvantages shown before because after purification, water is fed in a continuous isotopic distillation column which has a height: diameter ratio of 45 : 1 in the presence of a packing of minimum 100 theoretical plates with an efficiency of 8 theoretical plates per meter, but not less than 4.2 theoretical plates per meter with a liquid load of 2000 l/ (h x m²) and preferably of 2555 l/ (h x m²), a vacuum of 100 mm Hg being achieved and maintained at the top of the column, the temperature of the vapors at the top being 51.5°C, and the ratio of the raw material flow and of the vapor flow with a 60°C temperature is 1 : 5, the reflux flow being fed on the last plate of the superior stripping zone which in minimal conditions is the 90^{th} plate - the equivalent of a concentration of 30 ppm D/(D+H), the ratio between the number of theoretical plates in the stripping zone and of those from a lower enrichment zone is 10 : 1 and preferably 9 : 1, resulting in this latter case 10.5% of the reflux flow as a waste which flows through the enrichment zone with a concentration of under 200 ppm D/(D+H), obtaining 4.5% of the reflux flow deuterium depleted water with a concentration of 20-30 ppm D/(D+H), which is mineralized by contacting it, in the presence of static mixing promoters, with mineralizing additive at ambient temperature.

The cooling water for the deuterium depleted vapors, collected at the top of the column with a temperature of 45°C, comes from the purified water, dechlorinated and deionized respectively, which, after cooling the vapor flow, is introduced in the feeding water of the isotopical distillation column.

In the superior stripping zone in the packing from bottom to top a constant efficiency is distributed, preferably maximum 8 theoretical plates per meter and it can decrease with 50% theoretical plates per meter over the height of this zone, when a deuterium depleted water with a maximum concentration of 20 ppm D/(D+H) is obtained.

The mineralization of water with a 20-30 ppm D/(D+H) content is achieved with a mineralizing additive obtained by dissolving in 100 l water with a 20-30 ppm D/(D+H) content, in the indicated order, of salts from naturally mineralized waters of pharmaceutical quality consisting of minimum. 200 g calcium chloride, 100 g magnesium sulfate and 100 g sodium hydrogenocarbonate, resulting in a deuterium depleted potable water, which is not toxic for living organisms.

The installation according to the invention, in which the process is applied, does not have the disadvantages shown before because a steam boiler is connected through a pipe with the lower part of a lower enrichment zone of a packing, which also contains an upper stripping zone, at the intersection of these zones being connected to a thermally insulated isotopic distillation column in which the packing is placed, a feeding pipe, between the steam boiler and the column being connected a level regulation loop consisting of a level meter and a regulating tap, placed under the zone in which in the column are injected vapors provided by the steam boiler, between the vacuum ramp and the top zone and respectively a secondary condenser being connected a vacuum regulation loop, a collecting pipe being connected to an intermediate storage tank to which a short pipe is connected, provided with a dosing device, which communicates with a mixture pipe fitted with static mixing promoters, at which another short pipe is connected, having another automatic dosing device, connected to a storage tank for mineralizing additive, the mixing pipe being connected, through a pipe and through an ozonization subsystem with a final storage tank, to which is connected a final evacuation pipe connected to a UV sterilizing subsystem.

At the deionizing and purification subsystem the anterior and posterior pipes are connected.

### BRIEF DESCRIPTION OF DRAWINGS

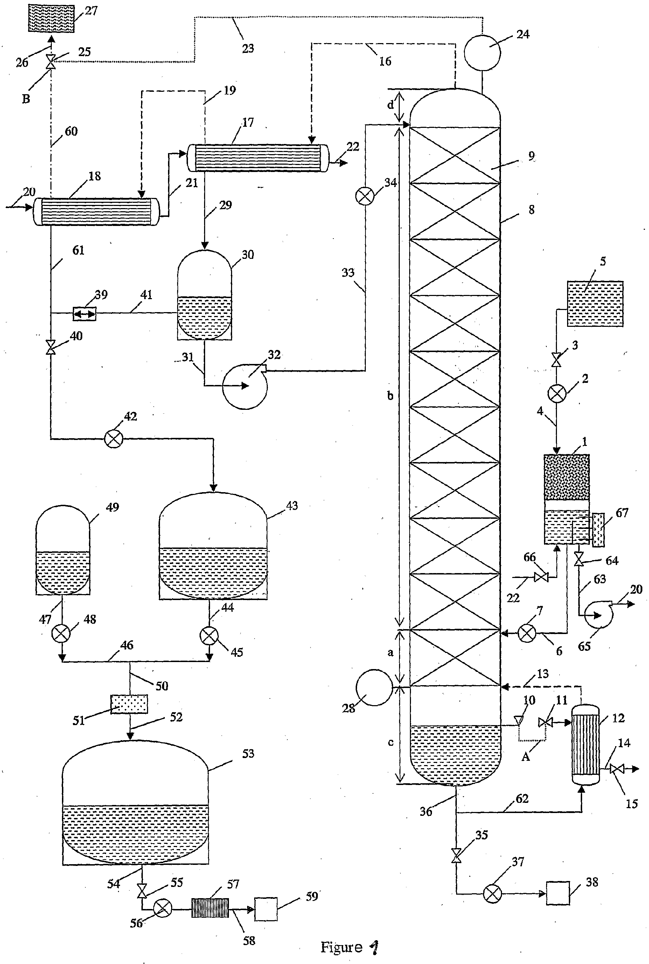

In the following an embodiment of the process and of the installation according to the group of inventions is given in connection with the Fig.1 which represents the principle scheme of an installation for obtaining mineralized deuterium depleted water.

### BEST MODE FOR CARYING OUT

The installation according to the invention comprises a purification subsystem **1,** water dechlorination and deionization respectively, which communicates, by a dosing device **2** fitted with a tap **3** on a pipe **4,** with a source **5** providing water with physico-chemical characteristics which make it potable water.

Subsystem **1** is known *per se* and comprises, preferably, an automatized purification mini-installation, of water dechlorination and deionization respectively, a situation not presented in the scheme. Water from subsystem **1** is gravitationally vehiculated through a feeding pipe **6** fitted with a flow meter **7** with automatic regulation of the flow in a thermally insulated isotopic distillation column **8,** having a ratio height : diameter of 45:1. The distillation column **8** is up to 45 m high and preferably 36 m high, when the diameter is 0.8 m. Column **8** is fitted with a packing **9,** for example an ordered packing, phosphor-bronze wire mesh, having the following technical features:
- density 360 kg/m³;
- specific free volume 0.952 m³/m³;
- specific free surface 670 m²/m³

The height on which the packing **9** is disposed is equivalent to a minimal theoretical height of 100 theoretical plates which is 22.5 m, possibly attaining for example 12 m, when an efficiency of 8 plates per meter is wanted. Along the height in the packing **9** two zones **a** and **b** are delimitated respectively the lower enrichment zone and the upper stripping zone containing a different number of theoretical plates, so that zone **a** can have a maximum of 90% of the equivalent height of the theoretical plates. Pipe **6** is connected to column **8** in the upper part of zone **a** which at its turn is adjacent to a zone **c** at the bottom of column **8.** The total height of the packing **9** is 22.5 m, distributed as 2.25 m on each of the 10 parts. The height of zone **a** is 3 m, that of zone **b** is 27 m, and that of zone **c** is 5 m. The feeding water accumulates in the bottom zone **c** and when its level in column **8** reaches a value representing 25% of the filling volume delimited by zone **c** the liquid excess is transferred by a level regulating loop **A** of the type level - steam flow, which comprises a level meter **10** and a regulating tap **11,** in a steam boiler **12** which generates vapors at 60°C transported by a pipe **13** in column **8** in which they are injected near by at the bottom of zone **a.** The resulting condensate is removed by a pipe **14** fitted with a closing tap **15** and it is sent to the condensate recovery system. The vapor flow at 60°C is ascendent in column **8** through zones **a** and **b** of the packing **9** and enters a zone **d** at the top, exits in the upper part through a evacuation pipe **16** connected to a primary condenser **17,** which is serially connected to the secondary condenser **18** through a pipe **19.**

The condenser **18** is connected to an anterior pipe **20** through which the vapor flow subjected to condensation passes in counter flow with the cooling water, which has at the inlet preferably a temperature of 15°C, this water being circulated through an intermediate pipe **21** to the primary condenser **17,** from which it is evacuated with a temperature of 45°C through posterior pipe **22** and enters subsystem **1.**

The column **8** at the upper zone **d** level is connected to a pipe **23** provided with a manometer **24** and a tap **25** respectively in a vacuum regulating loop **B,** pipe **23** being connected through a pipe **26** to a ramp **27** which achieves a vacuum of preferably 100 mm Hg at the top zone **d.** At the same time vacuum in column **8** is measured with another manometer **28** placed at the lower part of enrichment zone **a** and preferably it equals 150 mm Hg, value determined by the pressure drop in the ordered packing **9.**

The liquid flow resulted from the condensation of vapors in the primary condenser **17** which represents 75% from that of the vapor flow is taken through a pipe **29** to a reflux tank **30** from which it is suctioned through lower pipe **31** by a centrifugal pump **32** and pushed as reflux, with a flow of 1250 l/h with a pressure of 2 bar through a pipe **33** fitted with a regulating flow meter **34,** in column **8** at the lower part of zone **d,** in contact with the first plate of zone **b.**

After charging the installation with water and stabilization of the hydrodynamic regimen, the supplemental accumulation of liquid in column **8** is discharged by opening lower regulating tap **35** placed on lower evacuation pipe **36** connected to column **8** at the bottom part of zone **c.** On pipe **36** is fitted, after tap **35** a regulating flow meter **37,** and pipe **36** is connected to a collector **38** of deuterium enriched water with a maximum content of 200 ppm D/(D+H).

When deuterium concentration of the distillate from reflux tank **30** decreases from 144 ppm under 30 ppm D/(D+H), due to a signal provided by analyzer **39,** tap **40** is opened, the tap being fitted on collecting pipe **41** connected at the lower medium part of tank **30.** After tap **40,** pipe **41** is fitted with a flow meter **42** which measures and regulates the deuterium depleted water flow which is stored in an intermediate storage tank **43.** In this context, pipe **41** is connected to tank **43** at its upper part.

The deuterium depleted water from tank **43** circulates through a short pipe **44** fitted with an automatic dosing device **45** to a mixing pipe **46,** provided with statical mixing promoters, and to it another short pipe **47** is connected which is fitted with another automatic dosing device **48.** Pipe **47** is connected to a storage tank **49** with natural mineralizing additive.

Pipe **46** is in connexion through another pipe **50,** with an ozonizing subsystem **51** which communicates through a pipe **52** with a final storage tank **53,** fitted at the lower part with pipe **54** of final evacuation fitted with a tap **55** and a regulating flow meter **56,** as well as with a UV sterilizing subsystem **57.** This latter one has the
following technical characteristics: working capacity 1000 l/h, preferably 500 l/h and a lamp power of 35 W.

The subsystem **57** communicates through pipe **58** with a closed circuit bottling subsystem **59,** known *per se.*

The secondary condenser **18** is connected through pipe **60** with ramp **27,** and through another end pipe **61** is connected to pipe **41.** The whole installation is made of stainless steel for food industry.

Through pipe **62,** pipe **36** communicates up-flow from tap **35** with the lower part of boiler **12** in order to recycle through this boiler a liquid flow representing 92% from the total flow evacuated through pipe 36.

The subsystem 1 is preferably connected through pipe **63** fitted with a tap **64,** a
pump **65** which pumps water cooled with cryostat **67** at a temperature of 15°C through pipe **20** connected in turn to condenser **18.**

Pipe **22** fitted with tap **66** is connected to subsystem **1.**

The process according to the invention applied in the installation consists in treating used water as raw material having the physico-chemical characteristics of potable tap water, so that the end product has the following characteristics:

| | | |
|---|---|---|
| - pH: | | 6,5 -7,5 |
| - oxidability : | maximum | 5 mg KMnO₄/l |
| - conductivity: | maximum | 10 µS/cm |
| - free chlorine: | none | |
| - ammonium: | none | |
| - total hardness: | none | |

This water is subjected to a treatment comprising dechlorination and purification leading to a conductivity of less than 10 µS/cm, in subsystem **1** fed with liquid at a constant flow equivalent with 15% of the reflux flow, regulated in an automatic manner by flow meter **7,** when the vacuum at the feeding point in column **8** is 145 mm Hg. Distillation column **8** is fitted with packing **9,** which has preferably a height equivalent to 100 theoretical plates and a maximum height equivalent with 180 theoretical plates. The water feeding point is placed towards the bottom zone c at a height representing 10% of packing height **9.** Feeding water accumulates in bottom zone **c** and when the level equals 50% of the indicating panel of level meter **10** feeding with steam at 200°C is automatically started from boiler **12** provided with level regulating pipe **A** for zone **c** of the bottom, through regulating tap **11** and level meter **10.** Vapors fed in column **8,** having a temperature of 60°C circulate from bottom to top passing through zone **b** and are evacuated from zone **d,** 90% of them being condensed in primary condenser **17** and the rest in secondary condenser **18,** which are cooled in counter-flow with water. The 100 mm Hg vacuum in zone **d** at the top of column **8** is achieved with vacuum ramp **27** and is regulated by vacuum regulating system **B** through manometer **24** and a regulating tap **25,** and at the bottom zone **c** the vacuum is measured with manometer **28.** The liquid resulted from the condensation of vapors is gravitationally transferred in reflux tank **30** from which it is taken by pump **32** and pumped with a 2 bar pressure as reflux in zone **d** at the top end of column **8.** Reflux flow is measured and automatically regulated with flow meter **34** and preferably it is maintained at 1250 l/h.

Functioning is regulated so as to maintain a liquid charge in the top **d** zone of preferably 2555 l/ (h x m²), and when the liquid amount from column **8** is secured, tap **35** is opened and evacuation of the waste is performed at 60°C and at atmospheric pressure by a barometric leg at a flow measured and regulated with flow meter **37** equal with that fed to column **8** through flow meter **7.** In these conditions the installation is run to attain a stationary regimen, signifying maintaining constant flow rates, temperatures and pressures at the measuring and regulating points presented.

At the contact point of the liquid with water vapors at the surface of packing **9** by mass transfer is achieved a deuterium depletion of vapors and a deuterium enrichment of the liquid. At the same time, the feeding point with liquid of column **8** separates two zones **a** and **b** on the height of packing **9,** i.e. upper stripping zone **b** having minimum 90 theoretical plates and bottom enrichment zone **a** with a minimum of 10 theoretical plates.

In order to have the previously mentioned liquid charge in zone **d,** high performance packing **9** has an efficiency of 8 plates per meter but it can get to 4.2 plates per meter.

When the concentration of the distillate collected in condenser **18** drops to 20-30 ppm D/(D+H), being determined by analyzer **39,** tap **40** is opened and, at the coldest point, an extraction is performed of the product consisting in deuterium depleted water with a temperature of 25°C, representing preferably 4.5% of the reflux flow automatically measured and regulated with flow meter **42** and stored in tank **43,** and the waste flow rate is reduced at a value representing preferably 10.5% of reflux flow rate, respectively the difference between the feeding and the extraction flow rate. Deuterium depleted water is mineralized by mixing it with mineralizing additive from tank **49** in volume ratio 99 : 1 ensured by two automatic dosing devices **45** and **48,** then the mixture is subjected to antibacterial treatment by ozonization in ozonization subsystem **51** by forced bubbling at 25°C and atmospheric pressure of ozone enriched air ensuring a remanent ozone concentration in water of up to 0.15 mg/l. Then the mixture is stored in tank **53** with a minimum stay time of 2 hours for completion of the antibacterial treatment. The mineralizing additive is prepared by dissolving in 100 liters of deuterium depleted water containing 20-30 ppm D/(D+H) of 200 g calcium chloride, 100 g magnesium sulfate and 100 g sodium hydrogenocarbonate, pharmaceutical grade salts from naturally mineralized waters and is stored, at 25°C with a pH of 6.5-7.5, in tank **49.** Before bottling, mineralized deuterium depleted water is passed with a flow rate of 500 l/h through the UV sterilizing subsystem **57,** which besides the antibacterial treatment of water, destroys the remanent ozone traces. Deuterium depleted water has a constant deuterium concentration of 20 - 30 ppm D/(D+H) with the following quality characteristics:
- pH : 6,5-8,5 ;
- oxidability : maximum 2 mg KMnO₄/l;
- calcium : maximum 100 mg/l;
- magnesium: maximum 50 mg/l;
- total hardness : minimum 90 mg /l CaCO₃;
- ammonium: none;
- free chlorine: none;
- chlorides: maximum 250 mg /l;
- sulfates: maximum 250 mg /l;
- nitrates: maximum 50 mg /l;
- nitrites: none;
- bacteriological activity: sterile.

Because of these physico-chemical characteristics, this is a potable water for human consumption, which abides the standard regulation concerning the drinking water.

The bottling is performed in vessels manufactured, preferably, from a polymeric material, for example polyethylene for food industry, at a temperature of 25°C. Usually water has a expiration time of minimum 12 months.

## Claims

1. Process for obtaining deuterium depleted water, comprising:
- deionization and mainly dechlorination, as well as the purification to a conductivity of 10 µS/cm of a feeding water resulted, with the following characteristics: pH 6.5 - 7.5, oxidability - maximum 5 mg/l KMnO₄, free chlorine - none, ammonia - none, total hardness - none;
- the water, after the mentioned purification feeds a continuous isotopic distillation column **(8),** with a height up to 45 m, having a ratio height : diameter of 45 : 1, in the presence of a separation packing **(9)** placed in the column **(8),** on minimum 100 theoretical plates with an efficiency of 8 theoretical plates per meter, but not less than 4.2 theoretical plates per meter, with a liquid charge of 2000 I / (h x m²) and, preferably, of 2555 I / (h x m²);
- the feeding water accumulates in a bottom zone **(c)** of the column **(8)** and when its level in the column **(8)** reaches a value representing 25% of the filling volume delimited by the zone **(c),** the liquid excess is transferred by a level regulating loop **(A)** of the type level - steam flow, which comprises a level meter **(10)** and a regulating tap **(11),** in a steam boiler **(12)** which generates steam at 60°C transported by a pipe **(13)** in the column **(8)** in which it is injected near by at the bottom of an enrichment zone **(a),** when the level of the feeding water accumulated in the bottom zone **(c)** equals 50% of the indicating panel of the level meter **(10),** feeding with steam at 200°C is automatically started from the boiler **(12)** provided with the level regulating loop **(A)** through the regulating tap **(11)** and the level meter **(10);**
- feeding with steam from the boiler **(12)** at an absolute pressure of 150 mm Hg at 60°C of the upper part of the bottom zone **(c)** of the isotopic distillation column **(8),** the steam having an ascendent flow through the packing **(9),** in direct contact with the packing **(9)** being introduced the feeding water sucked in at atmospheric pressure;
- at a top zone **(d)** of the column **(8)** is obtained and maintained a constant vacuum of 100 mm Hg, at which steam is evacuated and condensed in two steps at the same vacuum, and at a counter-flow circulation of cooling water which is evacuated with a temperature of 45°C, the temperature of the steam at the top being 51.5°C, and the ratio of the raw material flow and of the steam flow with a 60°C temperature is 1 : 5, the 100 mm Hg vacuum in the zone **(d)** at the top of column **(8)** being achieved with a vacuum ramp **(27)** and is regulated by a vacuum regulating loop **(B)** through a manometer **(24)** and a regulating tap **(25)** provided on a pipe **(23);**
- the liquid resulted from the condensation of steam is gravitationally transferred in a reflux tank **(30)** from which it is taken by a pump **(32)** and pumped with a 2 bar pressure as reflux in the zone **(d)** at the top end of the column **(8),** a reflux flow being measured and automatically regulated with a flow meter **(34);**
- the water with a 20-30 ppm D/(D+H) content is stored so that a part of it is introduced at the top zone **(d)** of the column **(8)** at the upper part of the packing **(9),** and another part is stored at 25°C, obtaining a product flow consisting of deuterium depleted water with a concentration of 20-30 ppm D/(D+H), the product flow representing 4.5% of the reflux flow;
- the reflux flow being fed on the last plate of a superior stripping zone **(b)** of the column **(8)** which in minimal conditions is the 90th plate - the equivalent of a concentration of 30 ppm D/(D+H), the ratio between the number of theoretical plates in the stripping zone **(b)** and of those from the lower enrichment zone **(a)** is 10:1 and preferably 9:1;
- finally the deuterium depleted water is mineralized by contacting it, in the presence of static mixing promoters, with mineralizing additive at ambient temperature, treated against bacteria by ozonization, stored and then sterilized by UV and bottled;
- water with a deuterium content of less than 200 ppm D/(D+H) with a temperature of 60°C is evacuated from the column **(8)** at the lower part of the bottom zone **(c)** and a part being recycled through the boiler **(12)** and another part, representing 8% of the evacuated flow being stored for controlled evacuation in an industrial water circuit, the waste flow being reduced at a value representing 10.5% of the reflux flow, as a waste which flows through the enrichment zone with a concentration of under 200 ppm D/(D+H).

2. Process, according to claim 1 **characterized in that** the cooling water of the deuterium depleted steam, collected at the top of the column **(8)** with a temperature of 45°C comes from the dechlorinated and purified water, which, after the cooling of steam is added to the feeding water of de isotopic distillation column **(8).**

3. Process, according to claim 1, **characterized in that** in the top stripping zone **(b)** in the packing **(9)** there is a constant efficiency which starts preferably from 8 theoretical plates per meter and can decrease to 4.2 theoretical plates per meter along this zone, when deuterium depleted water with a minimum 20 ppm D/(D+H) is obtained.

4. Process according to claim 1, **characterized in that** the mineralization of water with a 20-30ppm D/(D+H) content is achieved with mineralizing additive obtained by dissolving in 100 I of water with a 20-30 ppm D/(D+H) content in the following order of pharmaceutical grade salts from naturally mineralized waters: minimum 200 g calcium chloride, 100 g magnesium sulfate and 100 g sodium hydrogenocarbonate resulting a deuterium depleted potable water.

5. Installation for obtaining the deuterium depleted water using the process according to claim 1 and any of the claims 2 - 4 comprising:
- a deionization and purification subsystem **(1),** which is connected through a pipe **(4)** with a potable water source **(5)** and through another pipe **(6),** provided with a automatic regulating flow meter **(7),** to a isotopic distillation column **(8)** having a bottom zone **(c)** and a top zone **(d);**
- near the bottom zone **(c)** being placed a steam boiler **(12)** connected through a feeding pipe **(13)** with the top part of the bottom zone **(c),** at the lower part of the bottom zone **(c)** being connected a lower evacuation pipe **(36),** provided with a tap **(35)** and an automatic flow meter **(37)** and being in connection with a deuterium enriched water tank **(38),** before the tap **(35)** the pipe **(36)** communicating with a pipe **(62)** connected to the lower part of the steam boiler **(12);**
- the steam boiler **(12)** is connected through pipe **(13)** with the inferior part of inferior concentration zone **(a)** of a packing **(9)** which also has a superior exhausting zone **(b),** at the intersection of the zones **(a, b)** being connected the mentioned isotopic distillation column **(8),** thermally insulated in which the packing **(9)** is placed, mentioned pipe **(6),** between steam boiler **(12)** and column **(8)** being connected a level regulating loop **(A)** for transferring the liquid excess from the bottom zone **(c)** of the column **(8)** to the steam boiler **(12)** which is suitable for generating vapors transported by a pipe **(13)** into the column **(8),** the level regulating loop **(A)** comprising a level meter **(10)** and a regulating tap **(11)** placed under the zone in which in column **(8)** are injected the steam provided by steam boiler **(12);**
- at the top zone **(d)** upper on the column **(8),** a pipe **(23)** is connected, linked to a ramp **(27)** which achieves a certain vacuum at the top, between vacuum ramp **(27)** and top zone **(d)** and the secondary condenser **(18)** respectively being connected a vacuum regulating loop **(B)** for regulating the vacuum at top zone **(d)** of the column **(8),** the vacuum regulating loop **(B)** comprising a manometer **(24)** fitted on the pipe **(23)** and a regulating tap **(25);**
- the steam flow being directed to the top of the column **(8)** through an upper evacuation pipe **(16)** in a primary condenser **(17)** serially linked to a secondary condenser **(18),** through both condensers **(17, 18)** flowing cooling water through some pipes anterior **(20),** intermediate **(21)** and posterior **(22)** respectively, the primary condenser **(17)** being linked through a pipe **(29)** with a reflux tank **(30)** linked to an inferior pipe **(31),** communicating with the suction of a centrifugal pump **(32)** which through a pushing pipe **(33)** fitted with a flow meter **(34)** circulates the reflux to the top zone **(d)** of the column **(8),** and respectively a collecting pipe **(41)** connected to an end pipe **(61)** and provided with a tap **(40)** and a automatically regulating flow meter **(42);**
- the collecting pipe **(41)** is connected to intermediate storage tank **(43)** connected to a short pipe **(44)** fitted with a dosing device **(45)** which communicates with a mixing pipe **(46)** provided with static mixing promoters, at which is connected also a short pipe **(47)** provided with another automatic dosing device **(48),** linked to a storage tank **(49)** with mineralizing additive, mixing pipe **(46)** being connected through pipe **(50)** and through ozonization subsystem **(51)** with a final storage tank **(53),** at which is linked a final evacuation pipe **(54)** connected to a UV sterilizing subsystem **(57).**

6. Installation for obtaining the deuterium depleted water according to claim 5, **characterized in that** to the deionization and purification subsystem **(1)** are connected pipes **(20, 22)** anterior and respectively posterior and a cryostat **(67).**

## Patentansprüche

1. Verfahren zum Erhalten des Deuterium verarmten Wassers, umfassend:
- Entionisierung und hauptsächliche Entchlorung, wie auch die Klärung zu einer Leitfähigkeit von 10 µS/cm des gefolgten Versorgungswassers, mit folgenden Kennzeichen: pH 6.5 - 7.5, Oxidierbarkeit - maximal 5 mg/m KMnO₄, freies Chlor - keines, Ammonium - keines, Gesamthärte - keine;
- das Wasser, nach der erwähnten Reinigung, versorgt eine kontinuierliche, isotopische Destillierungssäule **(8),** mit einer Höhe bis zu 45 m und einem Verhältnis: Höhe : Durchmesser von 45 : 1, in der Anwesenheit einer Trennverpackung **(9)** aufgestellt in der Säule **(8),** auf minimal 100 theoretischen Böden mit einer Leistungsfähigkeit von 8 theoretischen Böden per Meter, aber nicht weniger als 4,2 theoretischen Böden per Meter, mit einer Flüssigkeitsbelastung von 2000 l / (h x m²) und vorzüglich, von 2555 l / (h x m²);
- das Versorgungswasser sammelt man im Bodenbereich **(c)** der Säule **(8)** und wenn ihre Höhe in der Säule **(8)** einen Wert gleich mit 25% des Füllvolumens erreicht, begrenzt durch den Bereich **(c),** wird der Flüssigkeitsüberfluss durch einen Niveaueinstellungskreisflauf **(A)** der Art Niveau-Dampffluss übertragen, bestehend aus einem Füllstandsmessgerät **(10)** und einem Einstellungshahn **(11),** in einem Dampfboiler **(12)** der Dampf bei 60°C generiert, befördert durch eine Leitung **(13)** in der Säule **(8)** wo es eingespritzt wird in der Nähe des Bodens eines Bereicherungsbereichs **(a),** bis die Höhe des gesammelten Versorgungswassers im Bodenbereich **(c)** gleich ist mit 50% der Anzeigetafel des Füllstandsmessgeräts **(10),** die Versorgung mit Dampf bei 200°C beginnt gewöhnlich automatisch, aus dem Boiler **(12)** versehen mit dem Niveaueinstellungskreislauf **(A)** durch den Einstellungshahn **(11)** und dem Füllstandsmessgerät **(10);**
- die Dampfversorgung erfolgt vom Boiler **(12)** bei einem absoluten Druck von 150 mm Hg bei 60°C des höheren Teils des Bodenbereichs **(c)** in der isotopischen Destillierungssäule **(8),** wobei der Dampf einen aufsteigenden Durchfluss hat, durch die Verpackung **(9)** wobei das Versorgungswasser eingeführt wird, angesaugt in einer Druckatmosphäre;
- in einem Oberbereich **(d)** der Säule **(8)** erhält man und behält man Dauervakuum von 100 mm Hg, bei dem Dampf evakuiert wird und kondensiert wird in zwei Schritte bei gleichem Vakuum und bei einem Gegenstromkreislauf des Kühlwassers das evakuiert wird bei einer Temperatur von 45°C, wobei die Temperatur des Dampfes an der Spitze 51.5°C ist und das Verhältnis zwischen dem Rohstoffdurchfluss und dem Dampfdurchfluss bei einer Temperatur von 60°C 1 : 5 ist, wobei der Vakuum von 100 mm Hg im Bereich **(d)** an der Spitze der Säule **(8)** erreicht wird durch eine Vakuumrampe **(27)** und es eingestellt wird durch einen Vakuumeinstellungskreislauf **(B)** durch einen Manometer **(24)** und einem Einstellungshahn **(25)** vorgesehen auf der Leitung **(23);**
- die Flüssigkeit gefolgt aus der Dampfkondensation wird gravitationell in einem Rückflussbehälter **(30)** übertragen von wo sie durch eine Pumpe **(32)** übernommen wird und mit einem Druck von 2 bar als Rückfluss im Bereich **(d)** an der oberen Spitze der Säule **(8)** gepumpt wird und der Rückflussdurchfluss bemessen und automatisch eingestellt wird durch einen Durchflussmessgerät **(34);**
- das Wasser mit einem Inhalt von 20-30 ppm D/(D+H) sammelt man so, dass ein Teil davon im Spitzenbereich **(d)** der Säule **(8)** am oberen Teil der Verpackung **(9)** gelangt, ein anderer bei 25°C gesammelt wird, indem man einen Produktdurchfluss erhält, bestehend aus Deuterium verarmten Wasser mit einer Konzentration von 20-30 ppm D/(D+H), wobei der Produktdurchfluss 4.5% des Rückflussdurchflusses darstellt;
- der Rückflussdurchfluss versorgt an der letzten Platte eines höheren Erschöpfungsbereichs **(b)** der Säule **(8)** welche in minimalen Bedingungen die 90. Platte ist - das Äquivalent einer Konzentration von 30 ppm D/(D+H), das Verhältnis zwischen der Anzahl theoretischen Böden in dem Erschöpfungsbereich **(b)** und derjenigen aus dem niedrigeren Bereicherungsbereich **(a)** ist von 10:1 und vorzüglich 9:1;
- zuletzt mineralisiert man das Deuterium verarmte Wasser durch dessen Verbindung, in der Anwesenheit eines statischen Mischvermittlers, mit mineralisierenden Additive bei Umgebungstemperatur, behandelt weiterhin gegen Bakterien durch Ozonisierung, gesammelt und danach sterilisiert mit UV und in Flaschen gefüllt wird;
- Wasser mit einem Deuteriumgehalt geringer als 200 ppm D/(D+H) bei einer Temperatur von 60°C wird aus der Säule **(8)** an dem unteren Teil des Bodenbereichs **(c)** evakuiert und ein Teil wird wiederverwertet durch den Boiler **(12)** und ein anderer Teil, 8% des evakuierten Durchflusses darsellend, wird gesammelt zur kontrollierten Evakuierung in einem Industriewasserkreislauf, wobei der Abfallfluss verringert wird auf einem Wert welcher 10.5% des Rückflussdurchflusses darstellt, als Abfall das durch den Bereicherungsbereich mit einer Konzentration unter 200 ppm D/(D+H) fließt.

2. Verfahren nach Anspruch 1, **dadurch gekennzeichnet, dass** das Kühlungswasser des Deuterium verarmten Dampfs, gesammelt an der Spitze der Säule **(8),** mit einer Temperatur von 45°C, vom entchlorten und gereinigten Wasser kommt, das nach der Dampfauskühlung dem Versorgungswasser der isotopischen Destillierungssäule **(8)** beigefügt wird.

3. Verfahren nach Anspruch 1, **dadurch gekennzeichnet, dass** im Spitzenerschöpfungsbereich **(b)** der Verpackung **(9)** eine konstante Leistungsfähigkeit ist, welche vorzüglich von den 8 theoretischen Böden per Meter ausgeht und abnehmen kann bis zu 4.2 theoretischen Böden per Meter entlang diesem Bereich, wenn man Deuterium verarmtes Wasser mit minimal 20 ppm D/(D+H) erhalten wird.

4. Verfahren nach Anspruch 1, **dadurch gekennzeichnet, dass** Wasser mit einem Inhalt von 20-30 ppm D/(D+H) erhalten wird, aus mineralisierenden Additive erhalten durch die Auflösung in 100 l Wasser mit einem Inhalt von 20-30 ppm D/(D+H), in folgender Reihenfolge, eines Salz von pharmazeutischen Qualität aus natürlich mineralisierten Gewässer: minimal 200 g Kalziumchlorid, 100 g Magnesiumsulfat und 100 g Natriumhydrogenkarbonat, wobei man ein Deuterium verarmtes Wasser erhält.

5. Installation zum Erhalten des Deuterium verarmten Wassers, durch die Verwendung des Verfahren nach Anspruch 1 und einschließlich nach jeder den Ansprüchen 2-4, umfassend:
- ein Entionisierungs- und Reinigungsuntersystem **(1),** angeschlossen durch eine Leitung **(4)** an einer Trinkwasserquelle **(5)** und durch eine andere Leitung **(6),** vorgesehen mit einem automatisch einstellenden Durchflussmessgerät **(7),** an einer isotopischen Destillierungssäule **(8)** welche einen Bodenbereich **(c)** und einen Spitzenbereich **(d)** beinhaltet;
- in der Nähe des Bodenbereichs **(c)** befindet sich ein Dampfboiler **(12)** angeschlossen durch eine Versorgungsleitung **(13)** an den Spitzenteil des Bodenbereichs **(c),** wobei am unteren Teil des Bodenbereichs **(c)** eine untere Evakuierungsleitung **(36),** angeschlossen ist, vorgesehen mit einem Hahn **(35)** und einem automatischen Durchflussmessgerät **(37)** verbunden zu einem Deuterium bereicherten Wasserbehälter **(38),** vor dem Hahn **(35)** der Leitung **(36)** in Verbindung stehend mit der Leitung **(62)** angeschlossen am unteren Teil des Dampfboilers **(12);**
- der Dampfboiler **(12)** wird durch eine Leitung **(13)** an den unteren Teil des unteren Konzentrationsbereichs **(a)** der Verpackung **(9)** angeschlossen, der auch einen höheren Erschöpfungsbereich **(b)** hat und an der Krezung der Bereiche **(a, b)** wird die erwähnte, thermisch isolierte, isotopische Destillierungssäule **(8)** angeschlossen, in der man die Verpackung **(9)** aufstellt, wobei die erwähnte Leitung **(6),** zwischen Dampfboiler **(12)** und Säule **(8)** verbunden wird an den Niveaueinstellungskreislauf **(A)** zur Übertragung des Flüssigkeitsüberflusses aus dem Bodenbereich **(c)** der Säule **(8)** zum Dampfboiler **(12)** der entsprechend ist zur Generierung der Dämpfe befördert durch eine Leitung **(13)** in der Säule **(8),** wobei der Niveaueinstellungskreislauf **(A)** einen Füllstandsmessgerät **(10)** und einen Einstellungshahn **(11)** einschließt, aufgestellt im Bereich wo man in der Säule **(8)** den Dampf erzeugt vom Dampfboiler einspritzt **(12);**
- im Spitzenbereich **(d)** am oberen Teil der Säule **(8),** sieht man eine Leitung **(23)** vor, verbunden an einer Rampe **(27)** welche ein bestimmtes Vakuum an der Spitze erzeugt, zwischen der Vakuumrampe **(27)** und dem Spitzenbereich **(d)** und dem Sekundärkondensator **(18)** der angeschlossen wird an den Vakuumeinstellungskreislauf **(B)** zur Einstellung des Vakuums in den Spitzenbereich **(d)** der Säule **(8),** wobei der Vakuumeinstellungskreislauf **(B)** einen Manometer **(24)** aufgestellt auf Leitung **(23)** und einen Einstellungshahn **(25)** beinhaltet;
- der Dampfdurchfluss ist zur Spitze der Säule **(8)** gerichtet durch einer höheren Evakuierungsleitung **(16)** zu einem Primärkondensator **(17)** in Serie verbunden zu einem Sekundäkondensator **(18),** wobei durch beide Kondensatoren **(17, 18)** Kühlungswasser fließt durch Leitungen aufgestellt vor **(20),** zwischen **(21)** und nach **(22)** diesen, der Primärkondesator **(17)** ist verbunden durch eine Leitung **(29)** an einem Rückflussdurchflussbehälter **(30)** verbunden an einer unteren Leitung **(31),** welche mit der Absaugung einer Zentrifugalpumpe **(32)** kommuniziert, welche durch eine Stoßleitung **(33)** vorgesehen mit einem Durchflussmessgerät **(34)** den Rückfluss zum Spitzenbereich **(d)** der Säule **(8),** fliesst, beziehungsweise eine Sammelleitung **(41)** angeschlossen an einer Endleitung **(61)** und vorgesehen mit einem Hahn **(40)** und einem automatisch einstellenden Durchflussmessgerät **(42);**
- die Sammelleitung **(41)** ist angeschlossen an dem mittleren Sammelbehälter **(43)** angeschlossen an einer kurzen Leitung **(44)** vorgesehen mit einem Dosiergerät **(45)** der mit einer Mischleitung **(46)** vorgesehen mit statischen Mischvermittler kommuniziert, an der man auch eine kurze Leitung **(47)** anschließt vorgesehen mit einem anderen automatischen Dosiergerät **(48),** angeschlossen an einem Sammelbehälter **(49)** mit mineralisierenden Additive, wobei die Mischleitung **(46)** angeschlossen wird durch die Leitung **(50)** und durch das Ozonisierungsuntersystem **(51)** an einem Endsammelbehälter **(53),** an dem man eine Endevakuierungsleitung **(54)** verbunden zu einem UV-Sterilisierungsuntersystem **(57),** anschließt.

6. Installation zum Erhalten des Deuterium verarmten Wassers nach Anspruch 5, **dadurch gekennzeichnet** die Leitungen **(20, 22)** vor und nach und an ein Kälteregler **(67),** an dem Entionisierungs- und Reinigungsuntersystem **(1)** verbunden sind.

## Revendications

1. Procédé pour obtenir l'eau appauvrie en deutérium, comprenant:
- déionisation et surtout déchloration, ainsi que la purification à une conductivité de 10 µS/cm d'une eau d'alimentation résulté, avec les caractéristiques suivantes : pH - 6.6 - 7.5, oxydabilité - maximum 5mg/l KMnO₄, chlore libre - aucun, ammoniac - aucun, dureté totale- aucune;
- l'eau, après la purification mentionnée alimente une colonne de distillation isotopique continue **(8),** avec une hauteur de jusqu'au 45 m, ayant un rapport hauteur: diamètre de 45 : 1, dans la présence d'un garnissage de séparation **(9),** placé dans la colonne **(8),** sur minimum 100 plaques théorétiques avec une efficacité de 8 plaques théorétiques per mètre, mais pas moins de 4.2 plaques théorétiques per mètre, avec une charge de liquide de 2000 1 / (h x m²) et de préférence, de 2555 1 / (h x m²);
- l'eau d'alimentation s'accumule dans une zone du fond **(c)** de la colonne **(8)** et lorsque son niveau dans la colonne **(8)** atteint une valeur représentant 25% du volume d'alimentation délimité par la zone **(c),** le liquide excessif est transféré par une boucle régulatrice de niveau **(A)** du type niveau - débit de vapeurs d'eau, comprenant un compteur de niveau **(10)** et un robinet de réglage **(11),** dans un chaudière à vapeurs **(12)** générant vapeurs d'eau à 60°C transporté par un tuyau **(13)** dans la colonne **(8)** où on l'injecte à proximité au fond d'une zone d'enrichissement **(a),** lorsque le niveau de l'eau d'alimentation dans la zone du fond **(c)** est égal à 50% du panneau indicateur du compteur du niveau **(10),** l'alimentation avec vapeurs d'eau à 200°C est démarrée automatiquement du chaudière **(12)** prévu avec le boucle régulatrice du niveau **(A)** par le robinet de réglage **(11)** et le compteur de niveau **(10);**
- l'alimentation avec vapeurs du chaudière **(12)** à une pression absolue de 150 mm Hg à 60°C de la partie supérieure de la zone du fond **(c)** de la colonne de distillation isotopique **(8),** le vapeurs d'eau ayant un débit ascendant par le garnissage **(9),** en contact direct avec le garnissage **(9)** étant introduite l'eau d'alimentation aspirée à la pression atmosphérique;
- à une zone du sommet **(d)** de la colonne **(8)** on obtient et maintient un vide constant de 100 mm Hg, auquel les vapeurs d'eau sont évacués et condensés en deux étapes au même vide, et à une circulation à contre-courant de l'eau de refroidissement qui est évacuée avec une température de 45°C, la température des vapeurs d'eau à la sommet étant de 51.5°C, et le rapport du flux de matières premières et du flux des vapeurs d'eau avec une température de 60°C est 1:5, le vide de 100 mm Hg dans la zone **(d)** à la partie supérieure de la colonne **(8)** étant atteint avec une rampe de vide **(27)** et est régulé par une boucle régulatrice à vide **(B)** par un manomètre **(24)** et un robinet de réglage **(25)** fourni sur un tuyau **(23);**
- le liquide résultant de la condensation des vapeurs d'eau est transféré gravitationnellement dans un réservoir de reflux **(30)** d'où on le prend par une pompe **(32)** et pompé avec une pression de 2 bar comme reflux dans la zone **(d)** à l'extrémité supérieure de la colonne **(8),** un débit du reflux étant mesuré et réglé automatiquement avec un compteur de débit **(34);**
- l'eau avec un contenu de 20-30 ppm D/(D+H) est stockée ainsi qu'une partie soit introduite à la zone du sommet **(d)** de la colonne **(8)** à la partie supérieure du garnissage **(9),** et l'autre partie est stockée à 25°C, en obtenant un débit du produit consistant en eau appauvrie en deutérium avec une concentration de 20 - 30 ppm D/(D+H), le débit du produit représentant 4.5% du débit du reflux;
- le débit du reflux étant alimenté sur la dernière plaque d'une zone d'épuisement supérieure **(b)** de la colonne **(8)** qui en conditions minimales est la 90^{ème} plaque - l'équivalent d'une concentration de 30 ppm D/(D+H), le rapport entre le nombre des plaques théorétiques dans la zone d'épuisement **(b)** et ceux de la zone d'enrichissement inférieure **(a)** est 10:1 et de préférence 9:1;
- finalement, l'eau appauvrie en deutérium est minéralisée en la mettant en contact, dans la présence des promoteurs statiques de mixage, avec l'additive de minéralisation à la température ambiante, traitée contre les bactéries par ozonation, stockée et puis stérilisée par UV et embouteillée;
- l'eau avec un contenu de deutérium moins de 200 ppm D/(D+H) avec une température de 60°C est évacuée de la colonne **(8)** à la partie inférieure de la zone du fond **(c)** et une partie étant recyclée par le chaudière **(12)** et une autre partie, représentant 8% du débit évacué étant stockée pour un évacuation contrôlée dans un circuit industrielle de l'eau, le débit de déchet étant réduit à une valeur représentant 10.5% du débit de reflux, comme déchet qui s'écoule à travers de la zone d'enrichissement avec une concentration moins de 200 ppm D/(D+H).

2. Procédé selon la revendication 1, **caractérisé en ce que** l'eau de refroidissement des vapeurs d'eau appauvrie en deutérium, recueillie au sommet de la colonne **(8)** avec une température de 45°C résulte de l'eau déchlorée et purifiée, qui, après le refroidissement des vapeurs d'eau est ajoutée à l'eau d'alimentation de la colonne de distillation isotopique **(8).**

3. Procédé selon la revendication 1, **caractérisé en ce que** dans la zone d'épuisement supérieure **(b)** dans le garnissage **(9)** il y a une efficacité constante qui commence de préférence, des 8 plaques théorétiques per mètre et peut se diminue à 4.2 plaque théorétiques per mètre au long de cette zone, lorsqu'on obtient l'eau appauvrie en deutérium avec minimum 20 ppm D/(D+H).

4. Procédé selon la revendication 1, **caractérisé en ce que** la minéralisation de l'eau avec un contenu de 20-30 ppm D/(D+H) est réalisée avec un additive de minéralisation obtenu par la dissolution en 100 l d'eau avec un contenu de 20-30 ppm D/(D+H) dans l'ordre suivante des sels de qualité pharmaceutique des eaux minéralisées : au moins 200 g de chlorure de calcium, 100 g de sulfate de magnésium et 100 g d'hydrogénocarbonate de sodium, ce qui a pour résultat une eau potable appauvrie en deutérium.

5. Installation pour obtenir l'eau potable appauvrie en deutérium en employant le procédé selon la revendication 1 et quelconque des revendications 2 à 4 comprenant:
- un sous-système de déionisation et purification **(1),** qui est connecté par un tuyau **(4)** avec une source d'eau potable **(5)** et par un autre tuyau **(6),** fourni avec un débitmètre de régulation automatique **(7),** à une colonne de distillation isotopique **(8)** ayant une zone du fond **(c)** et une zone du sommet **(d)** ;
- à la proximité de la zone du fond **(c)** étant placé un chaudière à vapeurs **(12)** connecté par un tuyau d'alimentation **(13)** avec la partie supérieure de la zone du fond **(c),** à la partie inférieure de la zone du fond **(c)** étant connecté un tuyau inférieur d'évacuation **(36),** fourni avec un robinet **(35)** et un débitmètre automatique **(37)** et étant en connexion avec un réservoir **(38)** d'eau enrichi en deuterium, devant le robinet **(35),** le tuyau **(36)** communicant avec un tuyau **(62)** connecté à la partie inférieure du chaudière à vapeurs **(12);**
- un chaudière à vapeurs **(12)** est connecté par le tuyau **(13)** avec la partie inférieure de la zone de concentration inférieure **(a)** du garnissage **(9)** qui a aussi une zone supérieure d'épuisement **(b),** à l'intersection des zones **(a, b)** étant connectée la colonne de distillation isotopique **(8)** mentionnée, isolée thermiquement dans laquel on place le garnissage **(9),** le tuyau mentionné **(6),** entre le chaudière à vapeurs **(12)** et la colonne **(8)** étant connecté une boucle régulatrice du niveau **(A)** pour transférer l'excès de liquide de la zone du fond **(c)** de la colonne **(8)** au chaudière à vapeurs **(12)** qui est adéquate pour générer des vapeurs transportés par un tuyau **(13)** dans la colonne **(8),** la boucle régulatrice de niveau **(A)** comportant un compteur de niveau **(10)** et un robinet de réglage **(11)** placé sous la zone dans laquelle on injecte dans la colonne **(8)** les vapeurs d'eau fourni par le chaudière à vapeurs **(12);**
- à la zone du sommet **(d)** dessus de la colonne **(8),** on connecte un tuyau **(23),** relié à une rampe **(27)** qui atteint un vide certain à la partie supérieure, entre la rampe de vide **(27)** et la zone du sommet **(d)** et le condenseur secondaire **(18)** respectivement étant connecté à une boucle de régularisation de vide **(B)** pour régulariser le vide à la zone du sommet **(d)** de la colonne **(8),** la boucle de régularisation de vide **(B)** comprenant un monomètre **(24)** monté sur le tuyau **(23)** et un robinet de réglage **(25);**
- le débit des vapeurs d'eau étant dirigé vers la partie supérieure de la colonne **(8)** par un tuyau supérieur d'évacuation **(16)** dans un condensateur principal **(17)** relié en série à une condensateur secondaire **(18),** par les deux condensateurs **(17, 18)** écoulant l'eau de refroidissement par quelques tuyaux antérieur **(20),** intermédiaire **(21)** et respectivement postérieur **(22),** le condensateur principal **(17)** étant relié par un tuyau **(29)** avec un réservoir de reflux **(30)** relié à un tuyau inférieur **(31),** qui communique avec l'aspiration d'une pompe centrifuge **(32)** qui par un tuyau de poussé **(33)** monté avec un débitmètre **(34)** circule le reflux vers la zone du sommet **(d)** de la colonne **(8)** et respectivement un tuyau collecteur **(41)** connecté à un tuyau de bout **(61)** et fourni avec un robinet **(40)** et un débitmètre régulateur automatique **(42);**
- le tuyau collecteur **(41)** est connecté à un réservoir de stockage intermédiaire **(43)** connecté à un tuyau court **(44)** monté avec un dispositif de dosage **(45)** qui communique avec un tuyau de mixage **(46)** fourni avec promoteurs statiques de mixage, auxquels on connecte aussi un tuyau court **(47)** fourni avec un autre dispositif automatique de dosage **(48),** relié à un réservoir de stockage **(49)** avec additive de minéralisation, le tuyau de mixage **(46)** étant connecté par un tuyau **(50)** et par un système d'ozonation **(51)** avec un réservoir de stockage final **(53),** auquel on connecte un tuyau d'évacuation finale **(54)** connecté à un sous-système de stérilisation par UV **(57).**

6. Installation pour obtenir l'eau appauvrie en deutérium selon la revendication 5, **caractérisée en ce que** pour le sous-système de déionisation et purification **(1)** on connecte des tuyaux **(20, 22)** antérieur et respectivement postérieur et un cryostat **(67).**
